# EUROPÄISCHE PATENTSCHRIFT

(11) **EP 3 699 639 B1**
(45) Veröffentlichungstag und Bekanntmachung des Hinweises auf die Patenterteilung: **15.03.2023**
(21) Anmeldenummer: 20401011.0
(22) Anmeldetag: 17.02.2020
(51) Int. Cl.: G01S 17/87, A01M 7/00, A45F 5/00, G01S 7/481, G01S 13/08, G01S 13/10, G01S 13/87, G01S 13/88, G01S 15/10, G01S 15/87, G01S 17/42, G01S 17/10, G01S 15/88, G01S 17/88

(54) **SPRITZGESTÄNGE FÜR EIN LANDWIRTSCHAFTLICHES SPRITZGERÄT**
SPRAYING BOOM FOR AN AGRICULTURAL SPRAYER
TIGES DE PULVÉRISATION POUR UN PULVÉRISATEUR AGRICOLE

(30) Priorität: 20.02.2019 DE 102019104271
(43) Veröffentlichungstag der Anmeldung: 26.08.2020
(73) Patentinhaber: Amazonen-Werke H. Dreyer SE & Co. KG, 49205 Hasbergen (DE)
(72) Erfinder: Trentmann, Markus, 49134 Wallenhorst (DE); Große Prues, Frank, 49593 Bersenbrück (DE); Heer, Jochen, 49074 Osnabrück (DE); Wessels, Thomas, 49080 Osnabrück (DE)

(56) Entgegenhaltungen:
- EP-A1- 2 186 405
- DE-A1-102015 101 722
- DE-B3-102017 004 808
- US-A1- 2017 199 528

## Beschreibung

Die Erfindung betrifft ein Spritzgestänge nach dem Oberbegriff des Patentanspruchs 1 und ein landwirtschaftliches Spritzgerät nach dem Oberbegriff des Patentanspruchs 11.

An dem Spritzgestänge moderner landwirtschaftlicher Spritzgeräte, wie beispielsweise Feldspritzen, sind häufig Detektionseinheiten angeordnet, über welche der Abstand des Spritzgestänges zu einer landwirtschaftlichen Nutzfläche und/oder dessen Pflanzenbestand erfasst werden kann. Die erfassten Abstandsinformationen können dann einer Steuer- oder Regeleinrichtung bereitgestellt werden, welche für die Einhaltung eines Soll-Abstands des Spritzgestänges zu der landwirtschaftlichen Nutzfläche und/oder dessen Pflanzenbestand sorgt.

Zur Steuerung der Höhe eines Auslegers eines landwirtschaftlichen Geräts sind im Stand der Technik unterschiedliche Lösungen bekannt, beispielsweise schlägt die Druckschrift DE 10 2017 004 808 B3 die Verwendung einer Sendeempfangseinrichtung vor, welche mehrere Messsignale aussendet und zu den ausgesendeten Messsignalen jeweils ein Reflexionssignal empfängt. Hierdurch soll das Erkennen einer Vielzahl von Objekten mit einer qualitativ hohen und zuverlässigen Aussagegenauigkeit ermöglicht werden.

Diese und andere bekannte Lösungen, beispielsweise aus der EP 2 186 405 A1 zur Abstandserfassung weisen jedoch eine unzureichende Erfassungspräzision auf und/oder bedingen eine erhebliche Steigerung der Herstellungskosten entsprechender landwirtschaftlicher Spritzgeräte. Darüber hinaus erlauben die bisher eingesetzten Detektionseinheiten lediglich die Abstandserfassung in Bezug auf einen Messpunkt, sodass über die ermittelten Abstandswerte keine detaillierten Abstandsinformationen hergeleitet werden können, welche sich auf einen großflächigeren Bereich unterhalb des Spritzgestänges beziehen.

Weitere Detektionseinheiten sind beispielsweise in der DE 10 2015 101 722 A1 oder der US 2017 0 199 528 A1 gezeigt.

Die der Erfindung zugrundeliegende Aufgabe besteht somit darin, eine verbesserte Erfassung des Abstands zwischen einem Spritzgestänge eines landwirtschaftlichen Spritzgeräts und einer landwirtschaftlichen Nutzfläche und/oder dessen Pflanzenbestand zu ermöglichen. Insbesondere sollen im Rahmen der Abstandserfassung umfangreichere Abstandsinformationen ermittelt werden.

Die der Erfindung zugrundeliegende Aufgabe wird durch ein Spritzgestänge der eingangs genannten Art gelöst, wobei die zumindest eine Detektionseinheit des erfindungsgemäßen Spritzgestänges einen Mehrstrahl-Sensor umfasst.

Die Erfindung macht sich die Erkenntnis zunutze, dass mittels eines Mehrstrahl-Sensors der Abstandserfassung nicht länger lediglich ein Messpunkt zugrunde zu legen ist. Der Mehrstrahl-Sensor erlaubt die Abstandserfassung über mehrere Detektionsstrahlen, sodass wesentlich umfangreichere Abstandsinformationen aufgezeichnet werden können. Ferner erlaubt die Verwendung eines Mehrstrahl-Sensors eine beträchtliche Reduzierung der erforderlichen Anzahl an Abstandssensoren, um verwertbare Abstandsinformationen generieren zu können.

Die zumindest eine Detektionseinheit ist vorzugsweise an einem Gestängeabschnitt des Spritzgestänges befestigt und derart angeordnet und ausgerichtet, dass der Mehrstrahl-Sensor bei Verwendung des Spritzgestänges auf die landwirtschaftliche Nutzfläche und/oder dessen Pflanzenbestand gerichtet ist. Die zumindest eine Detektionseinheit ist vorzugsweise dazu eingerichtet, den Abstand der Detektionseinheit zu der landwirtschaftlichen Nutzfläche und/oder dessen Pflanzenbestand zu erfassen. Die Abstandserfassung erfolgt vorzugsweise über eine Laufzeitmessung, insbesondere über eine Lichtlaufzeitmessung. Insbesondere weist der Mehrstrahl-Sensor keine beweglichen Teile auf und/oder ist unbeweglich an einem Gestängeabschnitt befestigt. Hierdurch wird die Robustheit gegenüber mechanischer Beanspruchung erheblich gesteigert.

In einer bevorzugten Ausführungsform des erfindungsgemäßen Spritzgestänges ist der Mehrstrahl-Sensor als optischer Mehrstrahl-Sensor ausgebildet.

Vorzugsweise ist der Mehrstrahl-Sensor dazu ausgebildet, sichtbares Licht, Infrarotstrahlung oder ultraviolettes Licht in Form von Lichtimpulsen auszustrahlen, die entsprechenden Reflexionsstrahlungen zu empfangen und eine entsprechende Pulslaufzeitmessung durchzuführen. Alternativ kann der Mehrstrahl-Sensor auch als Ultraschall-Mehrstrahl-Sensor oder als Radar-Mehrstrahl-Sensor ausgebildet sein.

In einer weiteren Ausführungsform des erfindungsgemäßen Spritzgestänges weist der Mehrstrahl-Sensor einen flächigen und insbesondere länglichen Detektionsbereich auf. Der flächige Detektionsbereich kann auch als zweidimensionaler Detektionsbereich bezeichnet werden. Der Mehrstrahl-Sensor erlaubt im Gegensatz zu Einstrahl-Sensoren statt einer punktförmigen Messung eine flächige Messung, sodass sich auf der landwirtschaftlichen Nutzfläche und/oder dessen Pflanzenbestand ein flächiger, also zweidimensionaler, Erfassungsbereich aufspannt.

In einer anderen bevorzugten Ausführungsform des erfindungsgemäßen Spritzgestänges weist der Mehrstrahl-Sensor mehrere Sendeelemente auf, welche jeweils dazu eingerichtet sind, Detektionsstrahlen abzustrahlen, wobei die Sendeelemente jeweils unterschiedliche Hauptabstrahlrichtungen aufweisen. Durch die mehreren Sendeelemente ermöglicht der Mehrstrahl-Sensor eine mehrkanalige Messung. Im Unterschied zu Sensoren mit einkanaliger Messung weist der Mehrstrahl-Sensor vorzugsweise außerdem mehrere ortsauflösende Empfangselemente in Zeilen- oder Matrixanordnung oder eine ortsauflösende Empfangseinheit für die reflektierten Detektionsstrahlen der einzelnen Sendeelemente auf. Jedes Sendeelement sorgt also für ein eigenes Echo, sodass sich beispielsweise bei 10 Sendeelementen eine 10-kanalige Messung ergibt. Vorzugsweise sind die Detektionsstrahlen Lichtstrahlen, wobei die mehreren Sendeelemente vorzugsweise als Lichtquellen, insbesondere als Leuchtdioden (LEDs) ausgebildet sind. Vorzugsweise sind die Sendeelemente dazu eingerichtet, Licht im nahinfraroten Bereich auszustrahlen, insbesondere in dem Bereich zwischen 700nm und 1000nm. Vorzugsweise sind die Sendeelemente dazu eingerichtet, Licht mit einer Wellenlänge von etwa 820nm auszustrahlen. Durch die Verwendung von Licht aus dem nahinfraroten Bereich wird eine gesundheitsgefährdende Strahlung vermieden. Vorzugsweise sind die Sendeelemente nebeneinander und/oder entlang einer Geraden angeordnet. Vorzugsweise weisen die Sendeelemente jeweils unterschiedliche Ausrichtungen und/oder Neigungen auf. Der Mehrstrahl-Sensor weist vorzugsweise zumindest zwei, insbesondere zumindest fünf, besonders bevorzugt zumindest zehn, beispielsweise elf Sendeelemente auf. Vorzugsweise weisen die Detektionsstrahlen einen vergleichsweise großen Lichtfleck auf. Der Lichtfleck kann beispielsweise in einem Abstand von vier Metern von dem Mehrstrahl-Sensor einen Durchmesser von 55 cm aufweisen.

In einer Weiterbildung des erfindungsgemäßen Spritzgestänges sind die Sendeelemente derart angeordnet und ausgerichtet, dass die abgestrahlten Detektionsstrahlen der Sendeelemente in einer gemeinsamen Strahlenebene liegen. Sendeelemente sind vorzugsweise derart angeordnet und ausgerichtet, dass die Strahlenebene der Verwendung des Spritzgestänges windschief auf der landwirtschaftlichen Nutzfläche und/oder dessen Pflanzenbestand steht. Vorzugsweise ist die Strahlenebene gegenüber einer Vertikalen gekippt und/oder aus der Fahrtrichtung seitlich herausgedreht.

Im erfindungsgemäßen Spritzgestänge ist der zumindest eine Mehrstrahl-Sensor dazu eingerichtet, einen mehrstrahligen Tastfächer in Richtung der landwirtschaftlichen Nutzfläche und/oder dessen Pflanzenbestand abzustrahlen. Vorzugsweise weist der Tastfächer einen Fächerwinkel im Bereich von 60-120 Grad auf. Weiter bevorzugt ist ein Fächerwinkel im Bereich von 80-100 Grad, beispielsweise 88 Grad. Vorzugsweise öffnet sich der Tastfächer in Richtung der landwirtschaftlichen Nutzfläche und/oder dessen Pflanzenbestands. Durch die fächerartige Anordnung der Detektionsstrahlen des Mehrstrahl-Sensors wird ein flächiger und länglicher Detektionsbereich schräg zur Fahrtrichtung auf der landwirtschaftlichen Nutzfläche und/oder dessen Pflanzenbestand umgesetzt. Somit können über den Mehrstrahl-Sensor umfassende Abstandsinformationen ermittelt werden.

Im erfindungsgemäßen Spritzgestänge ist der zumindest eine Mehrstrahl-Sensor derart angeordnet und ausgerichtet, dass der abgestrahlte Tastfächer in einer Fächerebene liegt, welche gegenüber einer horizontalen ersten Referenzebene, einer sich in Vertikal- und Längsrichtung erstreckenden zweiten Referenzebene und/oder einer sich in Vertikal- und Querrichtung erstreckenden dritten Referenzebene geneigt ausgerichtet ist. Vorzugsweise schneidet die Fächerebene eine, zwei oder alle drei Raumebenen, welche durch das Spritzgestänge vorgegeben werden. Die Fächerebene entspricht dabei vorzugsweise der Strahlenebene. Die Längsrichtung entspricht der Fahrtrichtung oder einer Richtung, die parallel zur Fahrtrichtung verläuft. Durch die geneigte Ausrichtung des Tastfächers erstreckt sich der Detektionsbereich des Mehrstrahl-Sensors über einen Bereich längs und/oder quer zur Fahrtrichtung, sodass Abstandsinformationen nicht nur in Bezug auf Flächenbereiche unmittelbar unterhalb des Mehrstrahl-Sensors, sondern auch in Bezug auf Flächenbereiche seitlich des Mehrstrahl-Sensors und/oder in Bezug auf Flächenbereiche vor und/oder hinter dem Mehrstrahl-Sensor gewonnen werden können.

In einer anderen Ausführungsform des erfindungsgemäßen Spritzgestänges ist der zumindest eine Mehrstrahl-Sensor derart angeordnet und ausgerichtet, dass der Tastfächer um eine in Vertikalrichtung verlaufende Gierachse des Spritzgestänges verdreht abgestrahlt wird. Hierdurch ergibt sich vorzugsweise ein Schrägstellungswinkel zwischen der Fächerebene des Tastfächers und einer Längsachse des Spritzgestänges. Der zumindest eine Mehrstrahl-Sensor ist folglich derart angeordnet und ausgerichtet, dass der Schrägstellungswinkel, welcher auch als Gierwinkel des Tastfächers bezeichnet werden kann, zwischen der Fächerebene des Tastfächers und einer sich in Längsrichtung erstreckenden Vertikalebene liegt, wobei das Winkelfeld des Schrägstellungswinkels in einer Horizontalebene liegt. Die Längsachse des Spritzgestänges erstreckt sich bei Verwendung des Spritzgestänges parallel zur Fahrtrichtung. Der Schrägstellungswinkel beträgt vorzugsweise zwischen 20 und 60 Grad, besonders bevorzugt zwischen 30 und 50 Grad, beispielsweise etwa 40 Grad.

In einer Weiterbildung des erfindungsgemäßen Spritzgestänges ist der zumindest eine Mehrstrahl-Sensor derart angeordnet und ausgerichtet, dass der Tastfächer um eine in Längsrichtung des Spritzgestänges verlaufende Wankachse des Spritzgestänges verdreht abgestrahlt wird. Hierdurch ergibt sich vorzugsweise ein seitlicher Kippwinkel zwischen der Fächerebene des Tastfächers und einer Vertikalachse des Spritzgestänges. Der zumindest eine Mehrstrahl-Sensor ist folglich derart angeordnet und ausgerichtet, dass der seitliche Kippwinkel, welcher auch als Rollwinkel des Tastfächers bezeichnet werden kann, zwischen der Fächerebene des Tastfächers und einer sich in Längsrichtung erstreckenden Vertikalebene liegt, wobei das Winkelfeld des seitlichen Kippwinkels in einer sich in Querrichtung erstreckenden Vertikalebene liegt. Der seitliche Kippwinkel beträgt vorzugsweise zwischen 30 und 70 Grad, besonders bevorzugt zwischen 40 und 60 Grad, beispielsweise etwa 50 Grad.

In einer anderen bevorzugten Ausführungsform des erfindungsgemäßen Spritzgestänges ist der zumindest eine Mehrstrahl-Sensor derart angeordnet und ausgerichtet, dass der Tastfächer um eine in Querrichtung des Spritzgestänges verlaufende Nickachse des Spritzgestänges geneigt abgestrahlt wird. Hierdurch ergibt sich vorzugsweise ein Längskippwinkel zwischen der Mittelachse des Tastfächers und einer Vertikalachse des Spritzgestänges. Der zumindest eine Mehrstrahl-Sensor ist folglich derart angeordnet und ausgerichtet, dass der Längskippwinkel, welcher auch als Nickwinkel des Tastfächers bezeichnet werden kann, zwischen der Mittelachse des Tastfächers und einer sich in Querrichtung erstreckenden Vertikalebene liegt, wobei das Winkelfeld des Längskippwinkels in einer sich in Längsrichtung erstreckenden Vertikalebene liegt. Der Längskippwinkel beträgt vorzugsweise zwischen 15 und 55 Grad, besonders bevorzugt zwischen 25 und 45 Grad, beispielsweise etwa 35 Grad. Die Querrichtung verläuft bei Verwendung des Spritzgestänges quer zur Fahrrichtung. Aufgrund des Längskippwinkels ist eine oder sind mehrere, vorzugsweise zwei, Detektionsstrahlen im Wesentlichen nach vorne und über den Pflanzenbestand hinweg ausgerichtet. Dies erlaubt eine vorausschauende Erfassung von Höhenveränderungen im Pflanzenbestand.

Das erfindungsgemäße Spritzgestänge wird ferner dadurch vorteilhaft weitergebildet, dass der zumindest eine Mehrstrahl-Sensor einen unterhalb des Spritzgestänges liegenden Detektionsbereich aufweist, wobei ein hinterer Endabschnitt des Detektionsbereichs hinter dem Spritzgestänge und/oder ein vorderer Endabschnitt des Detektionsbereichs vor dem Spritzgestänge liegt. Der hintere Endabschnitt kann auch exakt unter dem Spritzgestänge liegen. Wenn der hintere Endabschnitt des Detektionsbereichs hinter dem Spritzgestänge liegt, können auch Abstandsinformationen zu Bereichen hinter dem Spritzgestänge erfasst werden. Wenn der vordere Endabschnitt des Detektionsbereichs vor dem Spritzgestänge liegt, können auch Abstandsinformationen zu Bereichen erfasst werden, welche vor dem Spritzgestänge liegen. Dies ist insbesondere bei einer Kurvenfahrt und/oder Rückwärtsfahrt des landwirtschaftlichen Spritzgeräts vorteilhaft.

Darüber hinaus ist ein erfindungsgemäßes Spritzgestänge bevorzugt, welches zwei seitliche Ausleger aufweist, wobei an jedem Ausleger zumindest eine Detektionseinheit angeordnet ist. Durch den flächigen und länglichen Detektionsbereich der Mehrstrahl-Sensoren sowie deren windschiefe Anordnung kann bereits eine Detektionseinheit pro Ausleger ausreichend sein, um verwertbare Abstandsinformationen, beispielsweise für eine Steuerungs- oder Regelungseinrichtung zur Gestängeführung zu ermitteln. Vorzugsweise ist zwischen den Auslegern ein Mittelsegment des Spritzgestänges angeordnet, wobei an dem Mittelsegment des Spritzgestänges vorzugsweise ebenfalls zumindest eine Detektionseinheit angeordnet ist. Insbesondere sind an dem Spritzgestänge mehrere Ausbringelemente, wie etwa Spritzdüsen, angeordnet, mittels welchen Spritzflüssigkeit auf die landwirtschaftliche Nutzfläche und/oder deren Pflanzenbestand ausbringbar ist.

Die der Erfindung zugrundeliegende Aufgabe wird ferner durch ein landwirtschaftlichen Spritzgerät der eingangs genannten Art gelöst, wobei das Spritzgestänge des landwirtschaftlichen Spritzgeräts nach einer der vorstehend beschriebenen Ausführungsformen ausgebildet ist. Hinsichtlich der Vorteile und Modifikationen des erfindungsgemäßen landwirtschaftlichen Spritzgeräts wird zunächst auf die Vorteile und Modifikationen des erfindungsgemäßen Spritzgestänges verwiesen.

Die Steuerungseinrichtung des landwirtschaftlichen Spritzgeräts kann auch eine Regelungseinrichtung sein. Vorzugsweise weist die Detektionseinheit einen Abstand von zumindest einem Meter zur landwirtschaftlichen Nutzfläche und/oder dessen Pflanzenbestand auf, sodass sich ein vergleichsweise großer Messbereich ergibt. Die aktive Gestängeführung des landwirtschaftlichen Spritzgeräts weist vorzugsweise einen oder mehrere Aktoren auf, mittels welchen die Höhe und/oder Neigung des Spritzgestänges veränderbar ist. Ferner können über die aktive Gestängeführung auch Impulse in das Spritzgestänge eingebracht werden, mittels welchen Gestängeschwingungen entgegengewirkt werden kann.

In einer weiteren bevorzugten Ausführungsform des erfindungsgemäßen landwirtschaftlichen Spritzgeräts ist die Steuerungseinrichtung dazu eingerichtet, auf Grundlage der Daten der zumindest einen Detektionseinheit die Höhe des Pflanzenbestandes auf der landwirtschaftlichen Nutzfläche zu ermitteln. Die windschiefe Anordnung der Detektionseinheit sorgt für eine Datenbasis, welche Tiefeninformationen umfasst, sodass auch die Bestandshöhe ableitbar ist. Somit werden neben den Abstandsinformationen gleichzeitig ergänzende Informationen betreffend die Höhe des Pflanzenbestandes aufgezeichnet, welche bei weiteren Arbeitsmaßnahmen berücksichtigt werden können.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen landwirtschaftlichen Spritzgeräts in einer Draufsicht;
- Fig. 2: einen Abschnitt des Spritzgestänges des in der Fig. 1 dargestellten landwirtschaftlichen Spritzgeräts in einer perspektivischen Darstellung;
- Fig. 3: einen Abschnitt des Spritzgestänges des in der Fig. 1 dargestellten landwirtschaftlichen Spritzgeräts in einer weiteren perspektivischen Darstellung;
- Fig. 4: eine Detektionseinheit eines erfindungsgemäßen Spritzgestänges in einer schematischen Darstellung;
- Fig. 5: eine Sendeeinheit eines Mehrstrahl-Sensors eines erfindungsgemäßen Spritzgestänges in einer schematischen Darstellung; und
- Fig. 6: eine weitere Detektionseinheit eines erfindungsgemäßen Spritzgestänges in einer schematischen Darstellung.

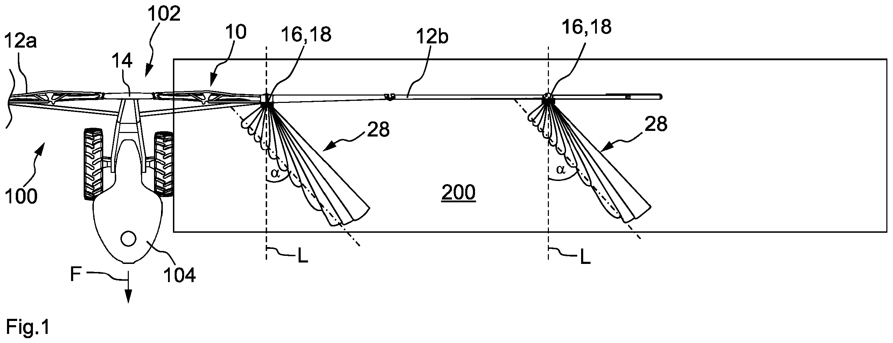

Die Fig. 1 zeigt ein als Feldspritze ausgebildetes landwirtschaftliches Spritzgerät 100 mit einem Spritzgestänge 10 und einer aktiven Gestängeführung 102.

Das Spritzgestänge 10 erstreckt sich quer zur Fahrtrichtung F und weist zwei einklappbare seitliche Ausleger 12a, 12b auf. Zwischen den seitlichen Auslegern 12a, 12b ist ein Mittelsegment 14 angeordnet, wobei die Ausleger 12a, 12b schwenkbar mit dem Mittelsegment 14 verbunden sind. Entlang des Spritzgestänges 10 sind mehrere als Spritzdüsen ausgebildete Ausbringelemente zum Ausbringen einer Spritzflüssigkeit angeordnet. Die Ausbringelemente sind fluidleitend mit dem Vorratstank 104 des Spritzgeräts 100 verbunden.

Mit der aktiven Gestängeführung 102 ist das Spritzgestänge 100 oberhalb einer landwirtschaftlichen Nutzfläche und/oder dessen Pflanzenbestand 200 aktiv führbar. Die Gestängeführung 102 weist Aktoren auf, über welche die Neigung und Höhe des Spritzgestänges 10 beeinflusst werden kann. Die Aktoren sind mit einer Steuerungseinrichtung des landwirtschaftlichen Spritzgeräts 100 verbunden, wobei die Steuerungseinrichtung die aktive Gestängeführung 102 auf Grundlage von erfassten Abstandsinformationen, welche den Abstand des Spritzgestänges 10 zu der landwirtschaftlichen Nutzfläche und/oder dessen Pflanzenbestand 200 betreffen, steuert.

Zur Erfassung der Abstandsinformationen sind an dem Spritzgestänge 10 mehrere Detektionseinheiten 16 angeordnet, über welche der Abstand zu der landwirtschaftlichen Nutzfläche und/oder dessen Pflanzenbestand 200 erfassbar ist.

Gemäß der dargestellten Ausführungsform sind an jedem Ausleger 12a, 12b jeweils zwei Detektionseinheiten 16 angeordnet. In einer alternativen Ausführungsform kann an den beiden Auslegern 12a, 12b jeweils nur eine Detektionseinheit 16 angeordnet sein, wobei eine weitere Detektionseinheit 16 an dem zwischen den Auslegern 12a, 12b angeordneten Mittelsegment 14 des Spritzgestänges 10 angeordnet sein kann.

Über die Steuerungseinrichtung des landwirtschaftlichen Spritzgeräts 100 kann außerdem die Höhe des Pflanzenbestandes 200 auf der landwirtschaftlichen Nutzfläche ermittelt werden. Die Ermittlung der Höhe des Pflanzenbestandes erfolgt ebenfalls auf Grundlage der Daten, welche von den Detektionseinheiten 16 aufgezeichnet werden.

Die Detektionseinheiten 16 sind jeweils an einem Gestängeabschnitt des Spritzgestänges 10 unbeweglich befestigt und dienen jeweils zum Erfassen des Abstands zur der landwirtschaftlichen Nutzfläche und/oder dessen Pflanzenbestand 200. Die Detektionseinheiten 16 weisen jeweils einen Mehrstrahl-Sensor 18 auf. Der Mehrstrahl-Sensor 18 ist dabei als optischer Mehrstrahl-Sensor ausgebildet und weist einen flächigen und länglichen Detektionsbereich auf. Die Mehrstrahl-Sensoren 18 setzen die Abstandserfassung über eine Laufzeitmessung um. Die Mehrstrahl-Sensoren 18 der jeweiligen Detektionseinheiten 16 weisen keine beweglichen Teile auf und sind jeweils dazu eingerichtet, einen mehrstrahligen Tastfächer 28 in Richtung der landwirtschaftlichen Nutzfläche und/oder dessen Pflanzenbestand 200 abzustrahlen.

Der Tastfächer 28 der jeweiligen Mehrstrahl-Sensoren 18 liegt jeweils in einer Fächerebene, welche gegenüber einer sich in Vertikal- und Längsrichtung erstreckenden Referenzebene geneigt ausgerichtet ist. Die Fig. 1 zeigt, dass der Mehrstrahl-Sensor 18 derart angeordnet und ausgerichtet ist, dass der Tastfächer 28 um eine in Vertikalrichtung verlaufende Gierachse des Spritzgestänges 10 verdreht abgestrahlt wird. Es ergibt sich also ein Schrägstellungswinkel α zwischen der Fächerebene des Tastfächers 28 und einer Längsachse L des Spritzgestänges 10. Die Längsachse L des Spritzgestänges 10 erstreckt sich parallel zur Fahrtrichtung F. Der Schrägstellungswinkel α beträgt bei der dargestellten Ausführungsform 40 Grad. Der Schrägstellungswinkel α, dessen Winkelfeld in einer Horizontalebene liegt, kann auch als Gierwinkel des Tastfächers 28 bezeichnet werden.

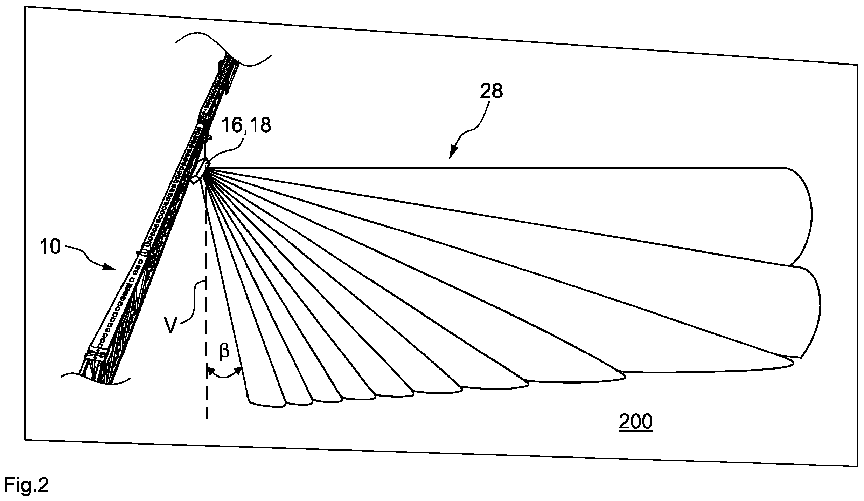

Die Fig. 2 zeigt, dass der Mehrstrahl-Sensor 18 außerdem derart angeordnet und ausgerichtet ist, dass der Tastfächer 28 um eine in Längsrichtung des Spritzgestänges verlaufende Wankachse des Spritzgestänges 10 verdreht abgestrahlt wird. Es ergibt sich somit ein seitlicher Kippwinkel β zwischen der Fächerebene des Tastfächers 28 und einer Vertikalachse V des Spritzgestänges 10. In der dargestellten Ausführungsform beträgt der seitliche Kippwinkel β 50 Grad. Der seitliche Kippwinkel β, dessen Winkelfeld in einer sich in Querrichtung erstreckenden Vertikalebene liegt, kann auch als Rollwinkel des Tastfächers 28 bezeichnet werden.

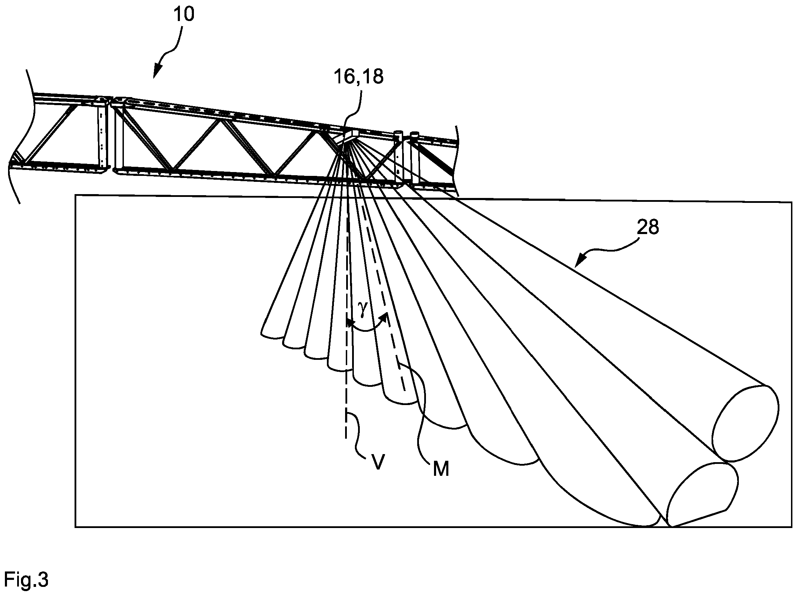

Die Fig. 3 zeigt, dass der Mehrstrahl-Sensor 18 außerdem derart angeordnet und ausgerichtet ist, dass der Tastfächer 28 um eine in Querrichtung des Spritzgestänges 10 verlaufende Nickachse des Spritzgestänges 10 geneigt abgestrahlt wird. Durch die geneigte Abstrahlung ergibt sich ein Längskippwinkel γ zwischen der Mittelachse M des Tastfächers 28 und einer Vertikalachse V des Spritzgestänges 10. Der Längskippwinkel γ beträgt in der dargestellten Ausführungsform 35 Grad. Der Längskippwinkel γ, dessen Winkelfeld in einer sich in Längsrichtung erstreckenden Vertikalebene liegt, kann auch als Nickwinkel des Tastfächers 28 bezeichnet werden.

Dadurch, dass der Tastfächer 28 einen Längskippwinkel γ aufweist, liegt sowohl der hintere Endabschnitt als auch der vordere Endabschnitt des Detektionsbereichs des Mehrstrahl-Sensors 18 vor dem Spritzgestänge 10. In einer alternativen Ausführungsform kann der hintere Endabschnitt des Detektionsbereichs des Mehrstrahl-Sensors 18 jedoch auch hinter dem Spritzgestänge 10 liegen.

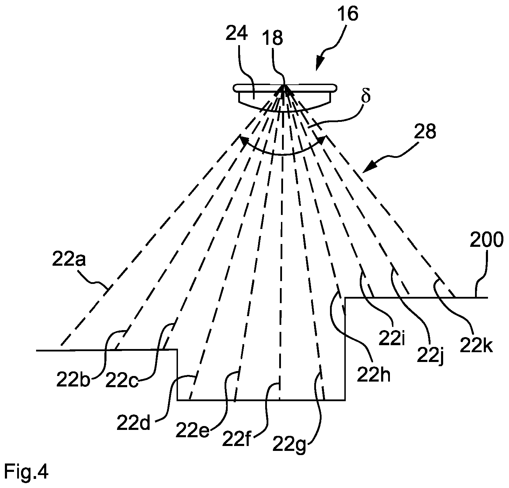

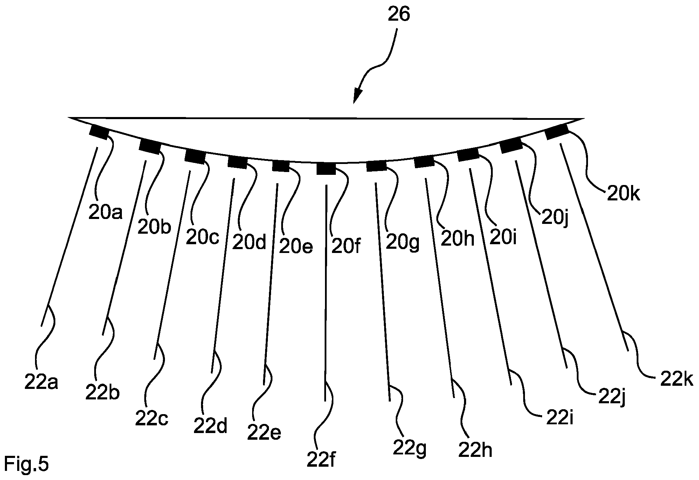

Die Fig. 4 zeigt eine Detektionseinheit 16, welche einen Mehrstrahl-Sensor 18 umfasst. Der Mehrstrahl-Sensor 18 ist in einem Gehäuse 24 der Detektionseinheit 16 angeordnet. In Zusammenschau mit der Fig. 5 ergibt sich, dass der Mehrstrahl-Sensor 18 mehrere, vorliegend elf, Sendeelemente 20a-20k aufweist, welche dazu eingerichtet sind, Detektionsstrahlen 22a-22k abzustrahlen. Die Sendeelemente 20a-20k sind als Lichtquellen, nämlich Leuchtdioden, ausgebildet und weisen unterschiedliche Ausrichtungen auf. Aufgrund der unterschiedlichen Ausrichtungen der Sendeelemente 20a-20k ergeben sich unterschiedliche Hauptabstrahlrichtungen der einzelnen Sendeelemente 20a-20k. Die Sendeelemente 20a-20k sind zu einer Sendeeinheit 26 zusammengefasst und sind nebeneinander entlang einer gebogenen Gerade angeordnet. Der sich ergebende Tastfächer 28 weist einen Fächerwinkel δ auf, wobei er Fächerwinkel δ bei der dargestellten Ausführungsform 88 Grad beträgt.

Die Fig. 4 zeigt außerdem einen Pflanzenbestand 200 mit einer variierenden Höhe. Ein entsprechender Pflanzenbestand 200 kann beispielsweise durch eine ungleichmäßige Düngerverteilung auf der landwirtschaftlichen Nutzfläche entstehen. Aufgrund der Ausrichtung des Tastfächers 28 des Mehrstrahl-Sensors 18 kann die Höhe der unterschiedlichen Bestandssegmente ermittelt werden. Die Höheninformationen können beispielsweise im Rahmen von nachfolgenden Arbeitsvorgängen auf der landwirtschaftlichen Nutzfläche berücksichtigt werden. Beispielsweise kann eine an die variierende Bestandshöhe angepasste Ausbringung von Pflanzenschutzmitteln oder Dünger erfolgen.

Die Sendeelemente 20a-20k sind derart angeordnet und ausgerichtet, dass die abgestrahlten Detektionsstrahlen 22a-22k in einer gemeinsamen Strahlenebene liegen, wobei der Mehrstrahl-Sensor 18 vorzugsweise derart angeordnet wird, dass die Strahlenebene bei der Verwendung des landwirtschaftlichen Spritzgeräts 100 windschief auf der landwirtschaftlichen Nutzfläche und/oder dessen Pflanzenbestand 200 steht.

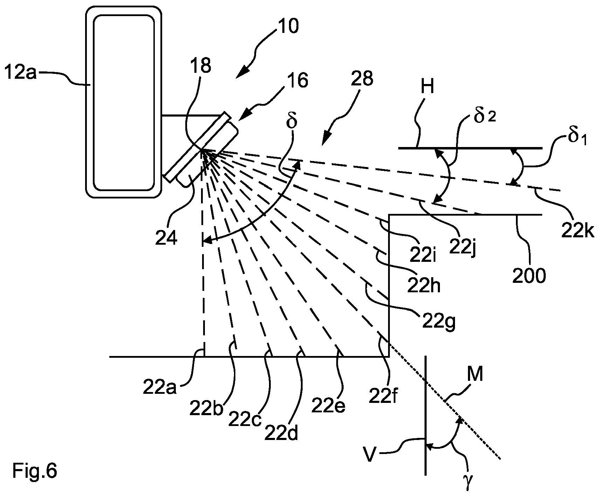

Die Fig. 6 zeigt einen Mehrstrahl-Sensor 18, welcher derart angeordnet und ausgerichtet ist, dass der Tastfächer 28 um eine in Querrichtung des Spritzgestänges 10 verlaufende Nickachse des Spritzgestänges 10 geneigt abgestrahlt wird, sodass sich ein Längskippwinkel γ zwischen der Mittelachse M des Tastfächers 28 und einer Vertikalachse V des Spritzgestänges 10 ergibt. Der Längskippwinkel γ, welcher auch als Nickwinkel des Tastfächers 28 bezeichnet werden kann, liegt also zwischen der Mittelachse M des Tastfächers 28 und einer sich in Querrichtung erstreckenden Vertikalebene, wobei das Winkelfeld des Längskippwinkels γ in einer sich in Längsrichtung erstreckenden Vertikalebene liegt. Da der Längskippwinkel γ in der dargestellten Ausführungsform etwa 35 Grad beträgt und der Tastfächer 28 einen Fächerwinkel δ von 88 Grad aufweist, beträgt der Winkel ε1 zwischen dem Detektionsstrahl 22k und der Horizontalachse H etwa 11 Grad und der Winkel ε2 zwischen dem Detektionsstrahl 22j und der Horizontalachse H etwa 19,8 Grad. Mithin zeigen die Detektionsstrahlen 22j, 22k im Wesentlichen nach vorne somit teilweise über den Pflanzenbestand 200. Somit können Höhenveränderungen im Pflanzenbestand 200 vorausschauend erfasst werden.

Der Mehrstrahl-Sensor 18 ist ferner derart angeordnet und ausgerichtet, dass der Tastfächer 28 um eine in Vertikalrichtung verlaufende Gierachse des Spritzgestänges 10 und um eine in Längsrichtung verlaufende Wankachse des Spritzgestänges 10 verdreht abgestrahlt wird. Dies ist aus Darstellungsgründen jedoch nicht gezeigt. Folglich schneidet die Fächerebene des Tastfächers 28, innerhalb welcher die Detektionsstrahlen 22a-22k liegen, alle drei Raumebenen, welche durch das Spritzgestänge 10 vorgegeben werden.

### Bezugszeichen

- 10: Spritzgestänge
- 12a, 12b: Ausleger
- 14: Mittelsegment
- 16: Detektionseinheiten
- 18: Mehrstrahl-Sensoren
- 20a-20k: Sendeelemente
- 22a-22k: Detektionsstrahlen
- 24: Gehäuse
- 26: Sendeeinheit
- 28: Tastfächer

- 100: Spritzgerät
- 102: Gestängeführung
- 104: Vorratstank

- 200: Pflanzenbestand

- F: Fahrtrichtung
- H: Horizontalachse
- L: Längsachse
- V: Vertikalachse
- M: Mittelachse des Tastfächers

- **α**: Schrägstellungswinkel
- **β**: seitlicher Kippwinkel
- **γ**: Längskippwinkel
- **δ**: Fächerwinkel
- **ε1, ε2**: Winkel

## Patentansprüche

1. Spritzgestänge (10) für ein landwirtschaftliches Spritzgerät (100), mit
- zumindest einer Detektionseinheit (16), welche dazu eingerichtet ist, den Abstand zu einer landwirtschaftlichen Nutzfläche und/oder dessen Pflanzenbestand (200) zu erfassen,
**dadurch gekennzeichnet, dass** die zumindest eine Detektionseinheit (16) einen Mehrstrahl-Sensor (18) umfasst und der zumindest eine Mehrstrahl-Sensor (18) dazu eingerichtet ist, einen mehrstrahligen Tastfächer (28) in Richtung der landwirtschaftlichen Nutzfläche und/oder dessen Pflanzenbestand (200) abzustrahlen und der zumindest eine Mehrstrahl-Sensor (18) derart angeordnet und ausgerichtet ist, dass der abgestrahlte Tastfächer (28) in einer Fächerebene liegt, welche gegenüber einer horizontalen ersten Referenzebene, einer sich in Vertikal- und Längsrichtung erstreckenden zweiten Referenzebene und/oder einer sich in Vertikal- und Querrichtung erstreckenden dritten Referenzebene geneigt ausgerichtet ist, wobei die Längsrichtung der Fahrtrichtung oder einer Richtung, die parallel zur Fahrtrichtung verläuft, entspricht, und sich durch die geneigte Ausrichtung des Tastfächers der Detektionsbereich des Mehrstrahl-Sensors über einen Bereich längs und/oder quer zur Fahrtrichtung erstreckt.

2. Spritzgestänge (10) nach Anspruch 1,
**dadurch gekennzeichnet, dass** der Mehrstrahl-Sensor (18) als optischer Mehrstrahl-Sensor ausgebildet ist.

3. Spritzgestänge (10) nach Anspruch 1 oder 2,
**dadurch gekennzeichnet, dass** der Mehrstrahl-Sensor (18) einen flächigen und insbesondere länglichen Detektionsbereich aufweist.

4. Spritzgestänge (10) nach einem der vorstehenden Ansprüche,
**dadurch gekennzeichnet, dass** der Mehrstrahl-Sensor (18) mehrere Sendeelemente (20a-20k) aufweist, welche jeweils dazu eingerichtet sind, Detektionsstrahlen (22a-22k) abzustrahlen, wobei die Sendeelemente (20a-20k) jeweils unterschiedliche Hauptabstrahlrichtungen aufweisen.

5. Spritzgestänge (10) nach Anspruch 4,
**dadurch gekennzeichnet, dass** die Sendeelemente (20a-20k) derart angeordnet und ausgerichtet sind, dass die abgestrahlten Detektionsstrahlen (22a-22k) der Sendeelemente (20a-20k) in einer gemeinsamen Strahlenebene liegen.

6. Spritzgestänge (10) nach einem der vorstehenden Ansprüche **dadurch gekennzeichnet, dass** der zumindest eine Mehrstrahl-Sensor (18) derart angeordnet und ausgerichtet ist, dass der Tastfächer (28) um eine in Vertikalrichtung verlaufende Gierachse des Spritzgestänges (10) verdreht abgestrahlt wird.

7. Spritzgestänge (10) nach einem der vorstehenden Ansprüche,
**dadurch gekennzeichnet, dass** der zumindest eine Mehrstrahl-Sensor (18) derart angeordnet und ausgerichtet ist, dass der Tastfächer (28) um eine in Längsrichtung des Spritzgestänges (10) verlaufende Wankachse des Spritzgestänges (10) verdreht abgestrahlt wird.

8. Spritzgestänge (10) nach einem der vorstehenden Ansprüche,
**dadurch gekennzeichnet, dass** der zumindest eine Mehrstrahl-Sensor (18) derart angeordnet und ausgerichtet ist, dass der Tastfächer (28) um eine in Querrichtung des Spritzgestänges (10) verlaufende Nickachse des Spritzgestänges (10) geneigt abgestrahlt wird.

9. Spritzgestänge (10) nach einem der vorstehenden Ansprüche,
**dadurch gekennzeichnet, dass** der zumindest eine Mehrstrahl-Sensor (18) einen unterhalb des Spritzgestänge (10) liegenden Detektionsbereich aufweist, wobei ein hinterer Endabschnitt des Detektionsbereichs hinter dem Spritzgestänge (10) und/oder ein vorderer Endabschnitt des Detektionsbereichs vor dem Spritzgestänge (10) liegt.

10. Spritzgestänge (10) nach einem der vorstehenden Ansprüche,
**dadurch gekennzeichnet, dass** das Spritzgestänge (10) zwei seitliche Ausleger (12a, 12b) aufweist und an jedem Ausleger (12a, 12b) zumindest eine Detektionseinheit (16) angeordnet sind.

11. Landwirtschaftliches Spritzgerät (100), mit
- einem Spritzgestänge (10) mit zumindest einer Detektionseinheit (16) zum Erfassen des Abstands zu einer landwirtschaftlichen Nutzfläche und/oder dessen Pflanzenbestand (200);
- einer aktiven Gestängeführung (102), mittels welcher das Spritzgestänge (10) oberhalb der landwirtschaftlichen Nutzfläche und/oder dessen Pflanzenbestand (200) aktiv führbar ist; und
- einer Steuerungseinrichtung, welche dazu eingerichtet ist, die aktive Gestängeführung (102) auf Grundlage des erfassten Abstands des Spritzgestänges (10) zu der landwirtschaftlichen Nutzfläche und/oder dessen Pflanzenbestand (200) zu steuern;
**dadurch gekennzeichnet, dass** das Spritzgestänge (10) nach einem der vorstehenden Ansprüche ausgebildet ist.

12. Landwirtschaftliches Spritzgerät (100) nach Anspruch 11,
**dadurch gekennzeichnet, dass** die Steuerungseinrichtung dazu eingerichtet ist, auf Grundlage der Daten der zumindest einen Detektionseinheit (16) die Höhe des Pflanzenbestandes (200) auf der landwirtschaftlichen Nutzfläche zu ermitteln.

## Claims

1. Spraying boom (10) for an agricultural sprayer (100), comprising
- at least one detection unit (16) which is designed to detect the distance from an agriculturally productive area and/or its vegetation (200),
**characterized in that** the at least one detection unit (16) comprises a multi-beam sensor (18), and the at least one multi-beam sensor (18) is designed to emit a multi-beam feeler fan (28) in the direction of the agriculturally productive area and/or its vegetation (200), and the at least one multi-beam sensor (18) is arranged and aligned such that the emitted feeler fan (28) is in a fan plane which is aligned so that it is inclined with respect to a horizontal first reference plane, a second reference plane extending in the vertical and longitudinal direction and/or a third reference plane extending in the vertical and transverse direction, the longitudinal direction corresponding to the direction of travel or a direction which extends in parallel with the direction of travel, and the detection region of the multi-beam sensor extends through a region along and/or transversely to the direction of travel due to the inclined alignment of the feeler fan.

2. Spraying boom (10) according to claim 1,
**characterized in that** the multi-beam sensor (18) is designed as an optical multi-beam sensor.

3. Spraying boom (10) according to either claim 1 or claim 2,
**characterized in that** the multi-beam sensor (18) has a planar and in particular elongate detection region.

4. Spraying boom (10) according to any of the preceding claims,
**characterized in that** the multi-beam sensor (18) has a plurality of transmitting elements (20a-20k) which are each configured to emit detection beams (22a-22k), the transmitting elements (20a-20k) each having different main emission directions.

5. Spraying boom (10) according to claim 4,
**characterized in that** the transmitting elements (20a-20k) are arranged and aligned such that the emitted detection beams (22a-22k) of the transmitting elements (20a-20k) are in a common beam plane.

6. Spraying boom (10) according to any of the preceding claims,
**characterized in that** the at least one multi-beam sensor (18) is arranged and aligned such that the tactile fan (28) is emitted so that it is rotated about a yaw axis of the spraying boom (10) that extends in the vertical direction.

7. Spraying boom (10) according to any of the preceding claims,
**characterized in that** the at least one multi-beam sensor (18) is arranged and aligned such that the tactile fan (28) is emitted so that it is rotated about a rolling axis of the spraying boom (10) that extends in the longitudinal direction of the spraying boom (10).

8. Spraying boom (10) according to any of the preceding claims,
**characterized in that** the at least one multi-beam sensor (18) is arranged and aligned such that the tactile fan (28) is emitted so that it is inclined about a pitch axis of the spraying boom (10) that extends in the transverse direction of the spraying boom (10).

9. Spraying boom (10) according to any of the preceding claims,
**characterized in that** the at least one multi-beam sensor (18) has a detection region below the spraying boom (10), a rear end portion of the detection region being behind the spraying boom (10) and/or a front end portion of the detection region being in front of the spraying boom (10).

10. Spraying boom (10) according to any of the preceding claims,
**characterized in that** the spraying boom (10) has two lateral arms (12a, 12b) and at least one detection unit (16) is arranged on each arm (12a, 12b).

11. Agricultural spreader (100), comprising
- a spraying boom (10) comprising at least one detection unit (16) for detecting the distance from an agriculturally productive area and/or its vegetation (200);
- an active boom guide (102) by means of which the spraying boom (10) can be actively guided above the agriculturally productive area and/or its vegetation (200); and
- a control device which is designed to control the active boom guide (102) on the basis of the detected distance of the spraying boom (10) from the agriculturally productive area and/or its vegetation (200);
**characterized in that** the spraying boom (10) is designed according to any of the preceding claims.

12. Agricultural spreader (100) according to claim 11,
**characterized in that** the control device is designed to determine the height of the vegetation (200) on the agriculturally productive area on the basis of the data from the at least one detection unit (16).

## Revendications

1. Rampe de pulvérisation (10) pour un pulvérisateur agricole (100), présentant
- au moins une unité de détection (16) conçue pour détecter la distance par rapport à une surface utile agricole et/ou à sa couverture végétale (200),
**caractérisée en ce que** ladite au moins une unité de détection (16) comprend un capteur à rayons multiples (18) et ledit au moins un capteur à rayons multiples (18) est conçu pour émettre un éventail de balayage à rayons multiples (28) vers la surface utile agricole et/ou vers sa couverture végétale (200) et ledit au moins un capteur à rayons multiples (18) est agencé et conçu de manière telle que l'éventail de balayage (28) émis se situe dans un plan d'éventail qui est orienté de manière inclinée par rapport à un premier plan de référence horizontal, à un deuxième plan de référence s'étendant dans la direction verticale et longitudinale et/ou à un troisième plan de référence s'étendant dans la direction verticale et transversale, la direction longitudinale correspondant à la direction de déplacement ou à une direction qui s'étend parallèlement à la direction de déplacement et s'étendant à travers l'orientation inclinée de l'éventail de balayage de la zone de détection du capteur à rayons multiples sur une zone le long de la direction de déplacement et/ou transversalement par rapport à celle-ci.

2. Rampe de pulvérisation (10) selon la revendication 1,
**caractérisée en ce que** le capteur à rayons multiples (18) est conçu comme un capteur optique à rayons multiples.

3. Rampe de pulvérisation (10) selon la revendication 1 ou 2,
**caractérisée en ce que** le capteur à rayons multiples (18) présente une zone de détection plane et en particulier allongée.

4. Rampe de pulvérisation (10) selon l'une quelconque des revendications précédentes,
**caractérisée en ce que** le capteur à rayons multiples (18) présente plusieurs éléments émetteurs (20a-20k) qui sont respectivement conçus pour émettre des rayons de détection (22a-22k), les éléments émetteurs (20a-20k) présentant respectivement des directions différentes d'émission principale.

5. Rampe de pulvérisation (10) selon la revendication 4,
**caractérisée en ce que** les éléments émetteurs (20a-20k) sont agencés et conçus de manière telle que les rayons de détection (22a-22k) émis des éléments émetteurs (20a-20k) se situent dans un plan de rayonnement commun.

6. Rampe de pulvérisation (10) selon l'une quelconque des revendications précédentes,
**caractérisée en ce que** ledit au moins un capteur à rayons multiples (18) est agencé et orienté de manière telle que l'éventail de balayage (28) est émis en rotation autour d'un axe de lacet s'étendant dans la direction verticale de la rampe de pulvérisation (10).

7. Rampe de pulvérisation (10) selon l'une quelconque des revendications précédentes,
**caractérisée en ce que** ledit au moins un capteur à rayons multiples (18) est agencé et orienté de manière telle que l'éventail de balayage (28) est émis en rotation autour d'un axe de direction de la rampe de pulvérisation (10) s'étendant dans la direction longitudinale de la rampe de pulvérisation (10).

8. Rampe de pulvérisation (10) selon l'une quelconque des revendications précédentes,
**caractérisée en ce que** ledit au moins un capteur à rayons multiples (18) est agencé et orienté de manière telle que l'éventail de balayage (28) est émis de manière inclinée autour d'un axe de tangage de la rampe de pulvérisation (10) s'étendant dans la direction transversale de la rampe de pulvérisation (10).

9. Rampe de pulvérisation (10) selon l'une quelconque des revendications précédentes,
**caractérisée en ce que** ledit au moins un capteur à rayons multiples (18) présente une zone de détection située sous la rampe de pulvérisation (10), une section d'extrémité arrière de la zone de détection étant située derrière la rampe de pulvérisation (10) et/ou une section d'extrémité avant de la zone de détection étant située devant la rampe de pulvérisation (10)

10. Rampe de pulvérisation (10) selon l'une quelconque des revendications précédentes,
**caractérisée en ce que** la rampe de pulvérisation (10) présente deux poutres latérales en porte-à-faux (12a, 12b) et au moins une unité de détection (16) est agencée au niveau de chaque poutre en porte-à-faux (12a, 12b).

11. Pulvérisateur agricole (100), présentant
- une rampe de pulvérisation (10) présentant au moins une unité de détection (16) destinée à détecter la distance par rapport à une surface utile agricole et/ou à sa couverture végétale (200) ;
- un guidage actif (102) de rampe, au moyen duquel la rampe de pulvérisation (10) peut être guidée activement au-dessus de la surface utile agricole et/ou de sa couverture végétale (200) ; et
- un dispositif de commande, conçu pour commander le guidage actif (102) de rampe sur la base de la distance détectée de la rampe de pulvérisation (10) par rapport à la surface utile agricole et/ou à sa couverture végétale (200) ;
**caractérisé en ce que** la rampe de pulvérisation (10) est conçue selon l'une quelconque des revendications précédentes.

12. Pulvérisateur agricole (100) selon la revendication 11,
**caractérisée en ce que** le dispositif de commande est conçu pour déterminer, sur la base des données de ladite au moins une unité de détection (16), la hauteur de la couverture végétale (200) sur la surface utile agricole.
